# EUROPEAN PATENT APPLICATION

(11) **EP 4 796 804 A1**
(43) Date of publication of application: **26.08.2026**
(21) Application number: 24879523.9
(22) Date of filing: 26.09.2024
(51) Int. Cl.: F16D 41/10, B60N 2/16, C10M 135/10, F16D 41/06

(54) **CLUTCH UNIT**

(30) Priority: 18.10.2023 JP 2023179495
(71) Applicant: NTN Corporation, Osaka-shi Osaka 530-0005 (JP)
(72) Inventor: NAKAMURA, Takatoshi, Iwata-shi Shizuoka 438-8510 (JP); HIBI, Yasumasa, Iwata-shi Shizuoka 438-8510 (JP); BIAN, Shaoluan, Iwata-shi Shizuoka 438-8510 (JP)
(74) Representative: Eder Schieschke & Partner mbB
(86) International application number: PCT/JP2024/034376
(87) International publication number: WO 2025/084097

(57) **Abstract**

A clutch unit 10 includes an input-side clutch part 11 that controls transmission and blocking of input rotational torque, and an output-side clutch part 12 that transmits rotational torque input from the input-side clutch part 11 to an output side and blocks rotational torque reversely input from the output side. The output-side clutch part 12 includes a stationary member 23 whose rotation is restrained, an output member 22 that outputs rotational torque, a plurality of engaging elements 27 disposed in a wedge gap between the stationary member 23 and the output member 22, an elastic member that biases the engaging elements toward a narrow side of the wedge gap, and grease filled between the stationary member 23 and the output member 22. The grease contains a thickener made with calcium sulfonate.

## Description

### TECHNICAL FIELD

The present invention relates to a clutch unit.

### BACKGROUND ART

As a clutch unit used for an automobile seat lifter unit and the like, there is known a clutch unit that transmits rotational torque input to an input member to an output member and blocks transmission of reverse input rotational torque from the output member to the input member.

In general, this type of clutch unit includes an engaging element such as a sprag or a roller to engage with both a stationary member and the output member, in order to block transmission of reverse input rotational torque.

In a state where rotational torque is not input to the input member, the engaging elements engage with the stationary member and the output member, thereby rotation of the output member is restricted. Therefore, even if reverse input rotational torque is input to the output member, rotation of the output member is restricted, and transmission of the reverse input rotational torque to the input member is blocked.

Whereas, when rotational torque is input to the input member, the engagement of the engaging element is released with rotation of the input member, thereby the rotational torque can be transmitted from the input member to the output member.

Here, in the clutch unit including the engaging element as described above, grease is filled between the output member and the stationary member, in order to reduce wear and frictional resistance between sliding surfaces, such as between the engaging element and the output member and between the engaging element and the stationary member when the output member rotates.

For example, Patent Literature 1 (Japanese Patent No. 4278844) discloses lithium-based grease as an example of grease used in a clutch unit for a seat lifter.

### CITATIONS LIST

### PATENT LITERATURE

Patent Literature 1: Japanese Patent No. 4278844

### SUMMARY OF INVENTION

### TECHNICAL PROBLEMS

In a case where lubricity of the grease is high, a wear reduction effect and a frictional resistance reduction effect between the sliding surfaces can be effectively obtained, and the engagement of the engaging element with the stationary member and the output member is easily released, improving operability at the time of unlocking. Whereas, if the engagement of the engaging element is easily released, there is a possibility that a locked state cannot be maintained when reverse input rotational torque is input. For example, in a seat lifter, when a load when a passenger sits on a seat acts as reverse input rotational torque, the locked state cannot be maintained, and the reverse input torque may be transmitted and lower a seat surface position of the seat.

The lithium-based grease described in Patent Literature 1 above is excellent in maintaining lubricity in a high-temperature environment in midsummer. However, since lithium soap contained as a thickener has self-lubricity, there is a concern that a static frictional force (static friction coefficient) between the engaging element and the output member and between the engaging element and the stationary member becomes too low.

Therefore, an object of the present invention is to secure the static frictional force between the engaging element and the output member and between the engaging element and the stationary member, and to favorably maintain the locked state.

### SOLUTIONS TO PROBLEMS

In order to solve the above problem, the present invention is a clutch unit including: an input-side clutch part that controls transmission and blocking of input rotational torque; and an output-side clutch part that transmits rotational torque input from the input-side clutch part to an output side and blocks rotational torque reversely input from the output side, in which the output-side clutch part includes a stationary member whose rotation is restrained, an output member that outputs rotational torque, a plurality of engaging elements disposed in a wedge gap between the stationary member and the output member, an elastic member that biases the engaging elements toward a narrow side of the wedge gap, and grease filled between the stationary member and the output member, and the grease contains a thickener made with calcium sulfonate.

As described above, in the clutch unit according to the present invention, by using the grease containing calcium sulfonate, it is possible to increase a static frictional force (static friction coefficient) between the engaging element and the stationary member and between the engaging element and the output member, as compared with a case of using lithium-based grease. As a result, engagement (locked state) of the engaging element with the stationary member and the output member is less likely to be released, thereby the locked state can be favorably maintained.

The grease may contain a solid lubricant in addition to the thickener made with calcium sulfonate. By adding the solid lubricant, it is possible to adjust the static frictional force so as not to become too large while securing the static frictional force necessary for maintaining the locked state, and thus, it is possible to improve operability.

The solid lubricant is preferably molybdenum disulfide, polytetrafluoroethylene, or melamine cyanuric acid. By using such a solid lubricant, both maintaining of the locked state and improvement of operability can be achieved.

Fine particles contained in the calcium sulfonate preferably have a particle diameter of 0.1 µm or more and 0.2 µm or less. By using, as a thickener, calcium sulfonate having fine particles having such a particle diameter, it is possible to more reliably secure the static frictional force between the engaging element and the stationary member and between the engaging element and the output member, and it is possible to favorably maintain the locked state.

Further, a percentage of the calcium sulfonate in the grease is preferably 16% or more and 20% or less. Even when the grease having such a calcium sulfonate content is used, the static frictional force between the engaging element and the stationary member and between the engaging element and the output member can be more reliably secured, and the locked state can be favorably maintained.

A surface roughness Ra of the engaging element is preferably 0.01 µm or more and 0.20 µm or less, a surface roughness Ra of the stationary member in the wedge gap is preferably 0.04 µm or more and 0.60 µm or less, and a surface roughness Ra of the output member in the wedge gap is preferably 0.20 µm or more and 2.5 µm or less. By setting such surface roughness Ra, the effect of the present invention described above can be more reliably obtained.

Further, the input-side clutch part and the output-side clutch part according to the present invention can be incorporated in an automobile seat lifter unit.

### ADVANTAGEOUS EFFECTS OF INVENTION

According to the present invention, a locked state can be favorably maintained.

### BRIEF DESCRIPTION OF DRAWINGS

FIG. 1 is a diagram illustrating a configuration of a seat and a seat lifter unit of an automobile.
FIG. 2 is a longitudinal cross-sectional view illustrating an overall configuration of a clutch unit according to the present embodiment.
FIG. 3 is a right side view of FIG. 2.
FIG. 4 is a left side view of FIG. 2.
FIG. 5 is a cross-sectional view taken along line A-A in FIG. 2.
FIG. 6 is a cross-sectional view taken along line B-B in FIG. 2.
FIG. 7A is a cross-sectional view of a lever-side side plate.
FIG. 7B is a left side view of FIG. 7A.
FIG. 8A is a cross-sectional view of a lever-side outer joint member.
FIG. 8B is a left side view of FIG. 8A.
FIG. 8C is a right side view of FIG. 8A.
FIG. 9A is a cross-sectional view of an inner joint member.
FIG. 9B is a left side view of FIG. 9A.
FIG. 10 is a perspective view of a cage.
FIG. 11A is a cross-sectional view of the cage.
FIG. 11B is a left side view of FIG. 11A.
FIG. 11C is a cross-sectional view of FIG. 11A.
FIG. 12 is a perspective view of an inner centering spring.
FIG. 13 is a perspective view of an outer centering spring.
FIG. 14A is a perspective view of an output shaft as viewed from one side.
FIG. 14B is a perspective view of the output shaft as viewed from another side.
FIG. 15A is a cross-sectional view of the output shaft.
FIG. 15B is a left side view of FIG. 15A.
FIG. 15C is a right side view of FIG. 15A.
FIG. 16A is a cross-sectional view of a brake-side outer joint member.
FIG. 16B is a left side view of FIG. 16A.
FIG. 17A is a cross-sectional view of a cover.
FIG. 17B is a right side view of FIG. 17A.
FIG. 18A is a cross-sectional view of a brake-side side plate.
FIG. 18B is a right side view of FIG. 18A.
FIG. 19A is a front view of a friction ring.
FIG. 19B is a left side view of FIG. 19A.
FIG. 19C is a right side view of FIG. 19A.
FIG. 20 is a cross-sectional view taken along line C-C in FIG. 2.
FIG. 21 is a perspective view illustrating a state where the brake-side outer joint member and the cover are assembled to the brake-side side plate.
FIG. 22A is a perspective view illustrating a state where the brake-side side plate is staked to be fixed to the brake-side outer joint member and the cover.
FIG. 22B is a perspective view of the state illustrated in FIG. 22A as viewed from a different angle.
FIG. 23 is an enlarged cross-sectional view of a main part, illustrating a leaf spring and a cylindrical roller during an operation of a brake-side clutch part.
FIG. 24 is an enlarged cross-sectional view illustrating grease containing calcium sulfonate, interposed between the cylindrical roller and the brake-side outer joint member and between the cylindrical roller and an output shaft.
FIG. 25 is an enlarged cross-sectional view illustrating grease containing lithium soap, interposed between the cylindrical roller and the brake-side outer joint member and between the cylindrical roller and the output shaft.
FIG. 26 is a graph illustrating relative values of friction coefficients of grease containing lithium soap and grease containing calcium sulfonate.
FIG. 27 is a schematic configuration diagram of a test device for measuring a friction coefficient.

### DESCRIPTION OF EMBODIMENT

An embodiment of a clutch unit according to the present invention will be described in detail with reference to the drawings. In the following embodiment, a clutch unit incorporated in an automobile seat lifter unit will be exemplified. Note that, without limiting to a clutch unit incorporated in an automobile seat lifter unit, the present invention is also applicable to a clutch unit incorporated in other device or equipment.

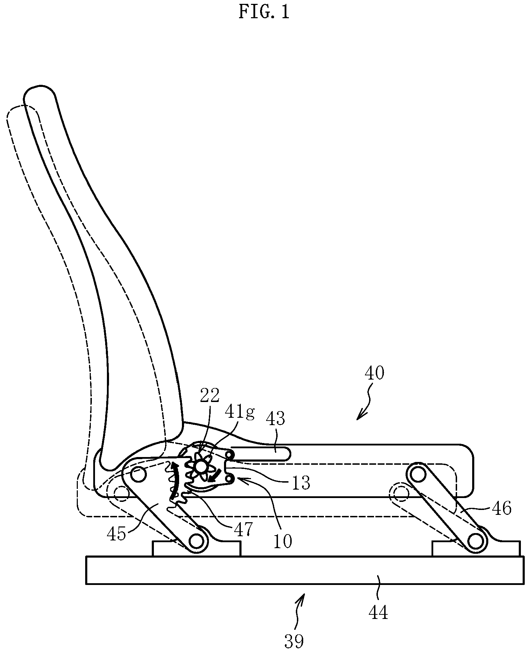

First, a configuration of an automobile seat lifter unit incorporating a clutch unit according to the present embodiment will be described with reference to FIG. 1.

A seat lifter unit 39 illustrated in FIG. 1 includes an operation lever 43 operated by a passenger such as a driver when adjusting a seat surface height of a seat 40, a clutch unit 10 that transmits input torque from the operation lever 43 and blocks reverse input from an output side, a slide movable member 44 provided below the seat 40 (floor surface), and link members 45 and 46 rotatably connected to the slide movable member 44 and the seat 40.

The operation lever 43 is attached to a lever-side side plate 13 of the clutch unit 10. When the operation lever 43 is rotationally operated, rotational torque at that time is transmitted to an output shaft 22 of the clutch unit 10. For example, in a case of lowering a seat surface of the seat 40, when the operation lever 43 of the seat lifter unit 39 is rotated downward, the output shaft 22 of the clutch unit 10 rotates in the arrow direction in FIG. 1. The output shaft 22 of the clutch unit 10 is provided with a pinion gear 41g that meshes with a sector gear 47 of the link member 45. When the output shaft 22 rotates, rotational torque is transmitted to the link member 45 via the pinion gear 41g. As a result, the link members 45 and 46 are inclined as indicated by broken lines in the figure, and the seat surface of the seat 40 is lowered.

Conversely, when the operation lever 43 is rotated upward, the seat surface of the seat 40 is raised by an operation in a direction opposite to the above-described operation.

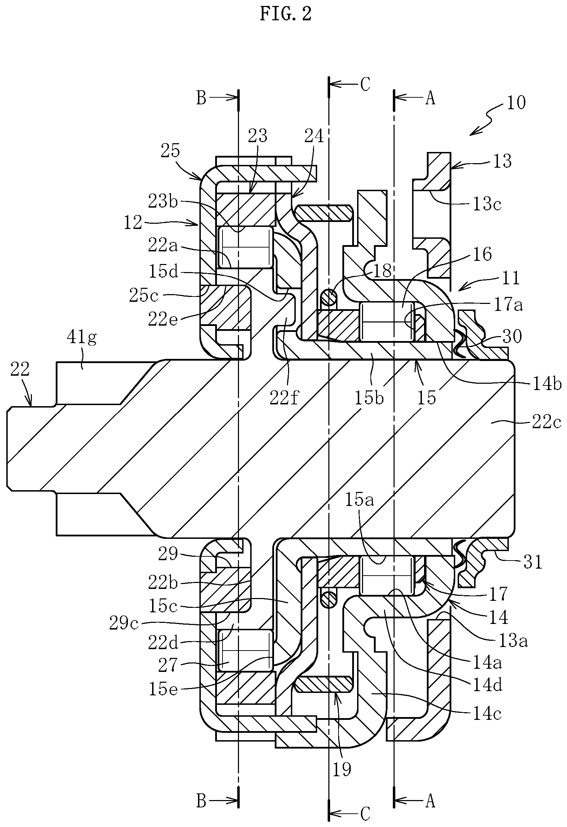

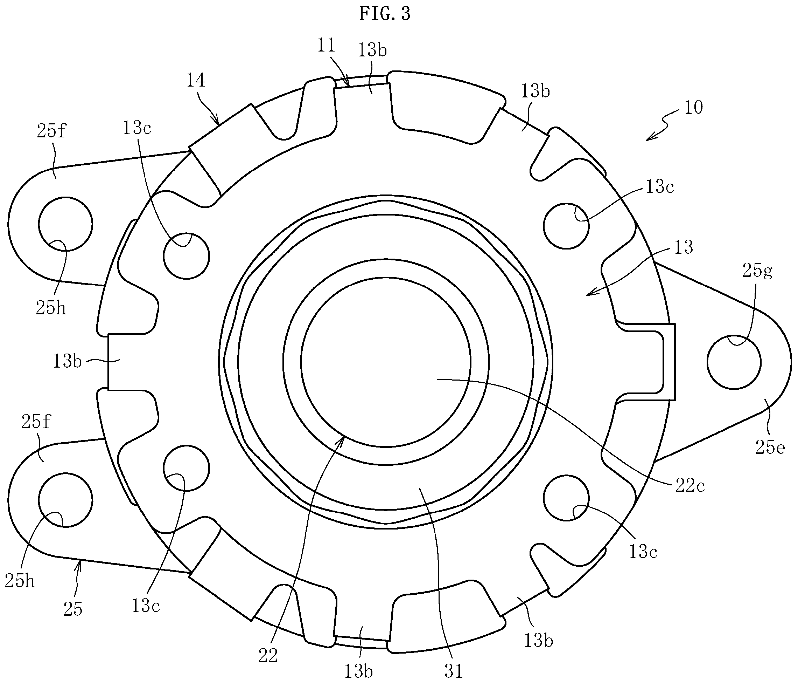

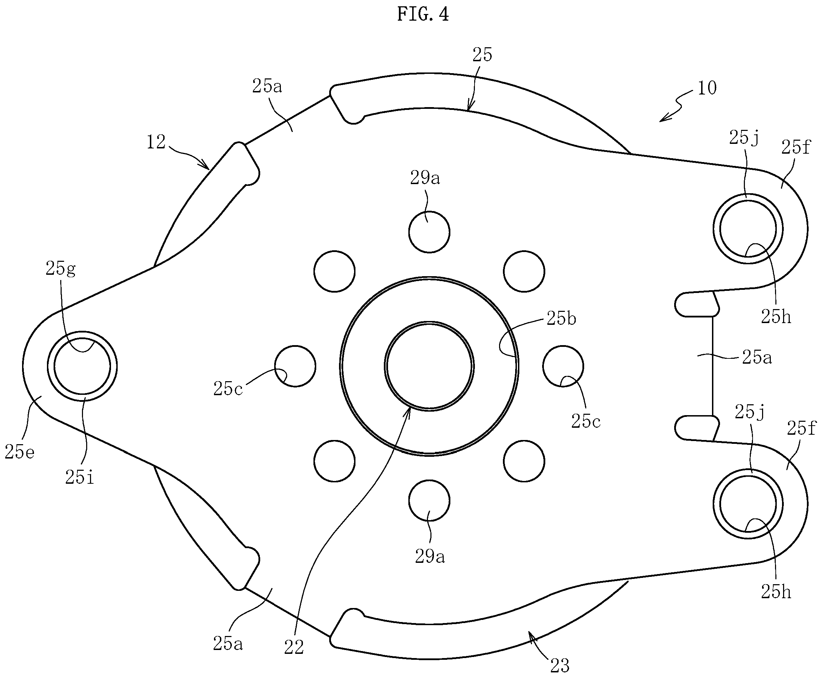

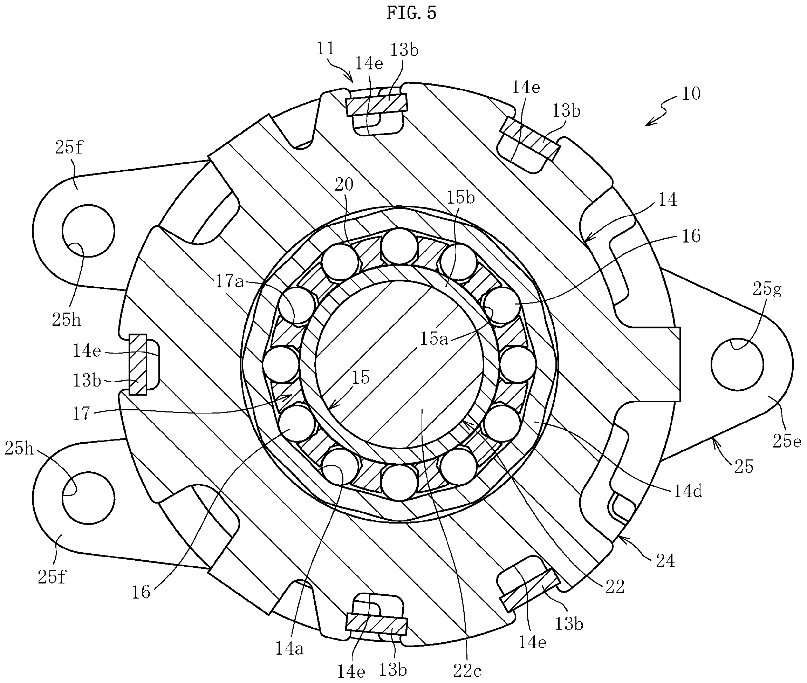

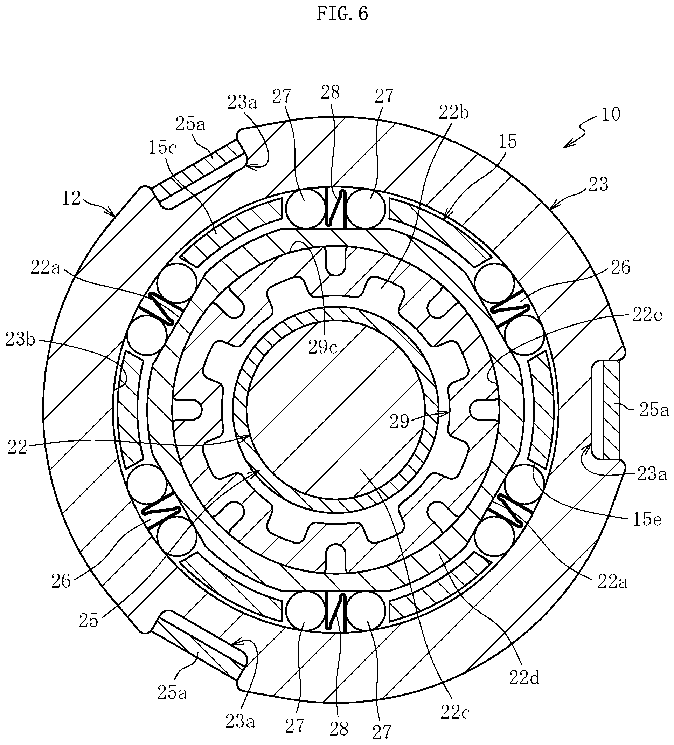

Next, an overall configuration of the clutch unit according to the present embodiment will be described with reference to FIGS. 2 to 6. FIG. 2 is a longitudinal cross-sectional view illustrating an overall configuration of the clutch unit according to the present embodiment, FIG. 3 is a right side view of FIG. 2, and FIG. 4 is a left side view of FIG. 2. Further, FIG. 5 is a cross-sectional view taken along line A-A in FIG. 2, and FIG. 6 is a cross-sectional view taken along line B-B in FIG. 2.

As illustrated in FIG. 2, the clutch unit 10 according to the present embodiment includes a lever-side clutch part 11 as an input-side clutch part that controls transmission and blocking of input rotational torque, and a brake-side clutch part 12 as an output-side clutch part that transmits rotational torque input from the lever-side clutch part 11 to an output side and blocks rotational torque reversely input from the output side.

The lever-side clutch part 11 includes, as main components, the lever-side side plate 13, a lever-side outer joint member 14, an inner joint member 15, a plurality of cylindrical rollers 16, a cage 17, an inner centering spring 18, and an outer centering spring 19. Whereas, the brake-side clutch part 12 includes, as main components, the inner joint member 15, the output shaft 22, a brake-side outer joint member 23, a cover 24, a brake-side side plate 25, a plurality of cylindrical rollers 27, a leaf spring 28 (see FIG. 6), and a friction ring 29. Note that, in FIG. 2, a member denoted by reference numeral 30 and a member denoted by reference numeral 31 are a wave washer and a washer attached to an outer peripheral surface of the output shaft 22. When the washer 31 is press-fitted into an end portion of the output shaft 22 with the wave washer 30 interposed in between, components are prevented from coming off the output shaft 22. Further, in the following description, a direction parallel to a rotation axis of the output shaft 22 is referred to as an "axial direction", and a direction (also including an orthogonal direction) intersecting the rotation axis is referred to as a "radial direction". Further, a circumferential direction of a circle centered on the rotation axis of the output shaft 22 will be referred to as a "circumferential direction".

The operation lever 43 described above (see FIG. 1) is attached to the lever-side side plate 13. Further, the lever-side side plate 13 is coupled to the lever-side outer joint member 14. When the passenger rotationally operates the operation lever 43, the lever-side side plate 13 and the lever-side outer joint member 14 rotate together, and rotational torque is input. That is, the lever-side side plate 13 and the lever-side outer joint member 14 function as input members for inputting rotational torque. Note that a coupling structure of the lever-side side plate 13 and the lever-side outer joint member 14 will be described in detail later.

The inner joint member 15 is a member functioning as a torque transmission member that transmits rotational torque input from the lever-side outer joint member 14 to the brake-side clutch part 12. A wedge gap 20 (see FIG. 5) is formed between an outer peripheral surface 15a of the inner joint member 15 and an inner peripheral surface (cam surface 14a) of the lever-side outer joint member 14, and the plurality of cylindrical rollers 16 as engaging elements are disposed in this wedge gap 20. The cylindrical rollers 16 engage with and disengage from the outer peripheral surface 15a of the inner joint member 15 and the inner peripheral surface (cam surface 14a) of the lever-side outer joint member 14 in the wedge gap 20, thereby controlling transmission and blocking of rotational torque from the lever-side outer joint member 14. Further, the plurality of cylindrical rollers 16 are held at circumferentially equal intervals by the cage 17.

The inner centering spring 18 is a first elastic member for returning the cage 17 to a neutral state. When rotational torque is input from the lever-side outer joint member 14, an elastic force is accumulated in the inner centering spring 18 with rotation of the lever-side outer joint member 14. Thereafter, when the input torque from the lever-side outer joint member 14 is released, the inner centering spring 18 returns the cage 17 to a neutral state by an elastic restoring force thereof.

The outer centering spring 19 is another elastic member located on an outer side of the inner centering spring 18, and is a member that functions as a second elastic member for returning the lever-side outer joint member 14 to a neutral state. When rotational torque is input from the lever-side outer joint member 14, an elastic force is accumulated in the outer centering spring 19 with rotation of the lever-side outer joint member 14. Then, when the input torque from the lever-side outer joint member 14 is released, the outer centering spring 19 returns the lever-side outer joint member 14 to a neutral state by an elastic restoring force thereof.

The output shaft 22 is a member functioning as an output member that outputs rotational torque. The output shaft 22 is disposed radially inside the brake-side outer joint member 23, and is rotatably supported. Whereas, the brake-side outer joint member 23, the cover 24, and the brake-side side plate 25 are members that are restrained in rotation and function as stationary members.

A wedge gap 26 (see FIG. 6) is formed between an inner peripheral surface 23b of the brake-side outer joint member 23 and an outer peripheral surface (cam surface 22a) of the output shaft 22, and a plurality of pairs of cylindrical rollers 27 as engaging elements are disposed in this wedge gap 26. Although detailed functions will be described later, the plurality of pairs of cylindrical rollers 27 engage with and disengage from the inner peripheral surface 23b of the brake-side outer joint member 23 and the outer peripheral surface (cam surface 22a) of the output shaft 22 between the brake-side outer joint member 23 and the output shaft 22 (in the wedge gap 26), thereby transmitting input torque from the inner joint member 15 and blocking reverse input torque from the output shaft 22. Further, the leaf spring 28 as an elastic member is disposed between the cylindrical rollers 27 of each pair (see FIG. 6). The leaf spring 28 presses the cylindrical rollers 27 on both sides in a direction away from each other, and biases the cylindrical rollers 27 toward a narrow side of the wedge gap 26. Note that, instead of the leaf spring 28, another elastic member such as a coil spring may be used.

Further, the friction ring 29 is fixed to the brake-side side plate 25. The friction ring 29 is disposed so as to be in contact with (relatively slide on) the rotating output shaft 22, and imparts rotational resistance to the output shaft 22.

Next, main components of the lever-side clutch part 11 and the brake-side clutch part 12 according to the present embodiment will be described in detail.

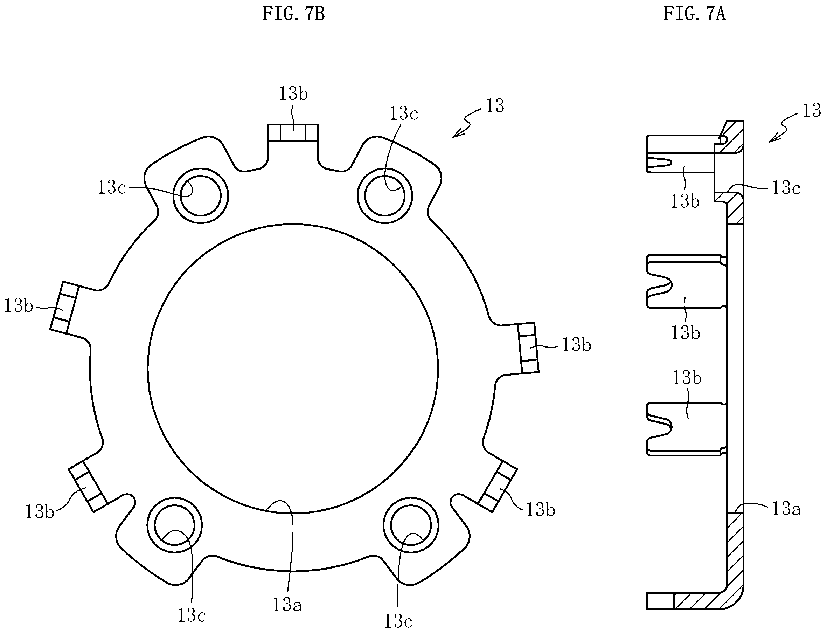

FIGS. 7 and 7B are views illustrating a configuration of the lever-side side plate 13. FIG. 7A is a cross-sectional view of the lever-side side plate 13, and FIG. 7B is a left side view of FIG. 7A.

As illustrated in FIGS. 7A and 7B, a hole 13a through which the output shaft 22 and the inner joint member 15 are inserted is formed at a center of the lever-side side plate 13. Further, a plurality of (for example, five) claw portions 13b are protrusively provided at an outer peripheral edge of the lever-side side plate 13. These claw portions 13b are bent and molded in the axial direction, and a distal end portion of the bent portion is formed in a bifurcated shape and is inserted into a recessed portion 14e of the lever-side outer joint member 14 to be described later (see FIG. 5). In a state where the claw portion 13b is inserted into the recessed portion 14e, the bifurcated distal end portion of the claw portion 13b is opened outward, thereby the lever-side side plate 13 is staked and fixed to the lever-side outer joint member 14. Further, the lever-side side plate 13 is provided with a plurality of (for example, four) holes 13c to which the operation lever 43 described above is attached.

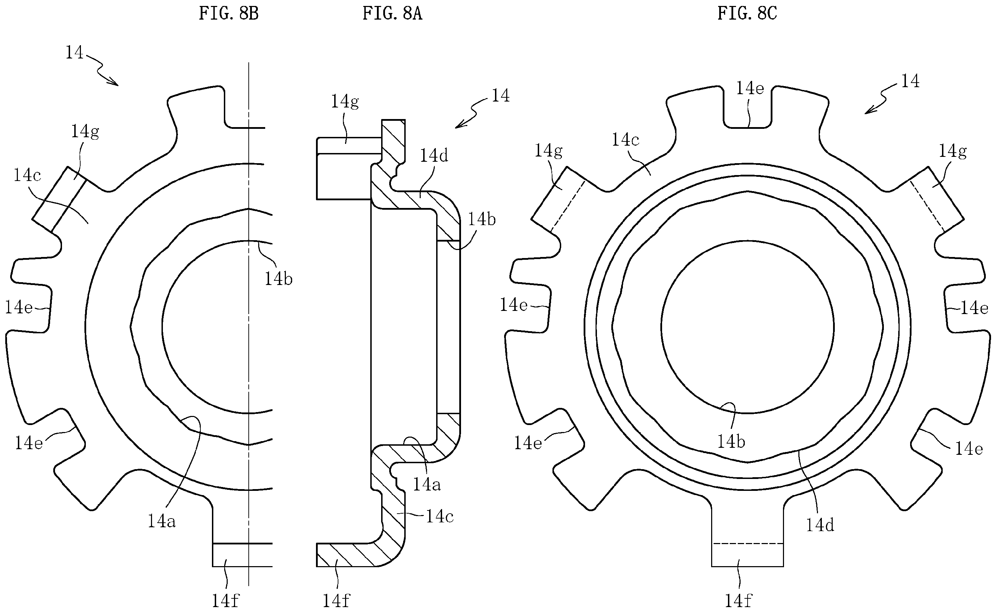

FIGS. 8A to 8C are views illustrating a configuration of the lever-side outer joint member 14. FIG. 8A is a cross-sectional view of the lever-side outer joint member 14, FIG. 8B is a left side view of FIG. 8A, and FIG. 8C is a right side view of FIG. 8A.

As illustrated in FIGS. 8A to 8C, the lever-side outer joint member 14 includes a cylindrical portion 14d extending in the axial direction and an annular portion 14c expanding radially outward from one axial end portion of the cylindrical portion 14d. A hole 14b through which the output shaft 22 and the inner joint member 15 are inserted is formed radially inside the cylindrical portion 14d. Further, a plurality of cam surfaces 14a are formed on an inner peripheral surface of the cylindrical portion 14d at circumferentially equal intervals.

A plurality of (for example, three) claw portions 14f and 14g protruding in the axial direction is provided at an outer peripheral edge portion of the annular portion 14c. Among these claw portions 14f and 14g, one claw portion 14f is a portion for locking the outer centering spring 19, and the remaining two claw portions 14g are portions functioning as restricting portions for restricting an operation angle of the operation lever 43.

Further, a plurality of (five in the figure) recessed portions 14e, into which the claw portions 13b (see FIGS. 7A and 7B) of the lever-side side plate 13 described above are inserted, are formed on an outer peripheral surface of the annular portion 14c. By inserting the claw portions 13b of the lever-side side plate 13 into these recessed portions 14e and staking the claw portions 13b, the lever-side side plate 13 and the lever-side outer joint member 14 are connected (see FIG. 5). As a result, the lever-side side plate 13 and the lever-side outer joint member 14 can rotate together accompanied with input of rotational torque.

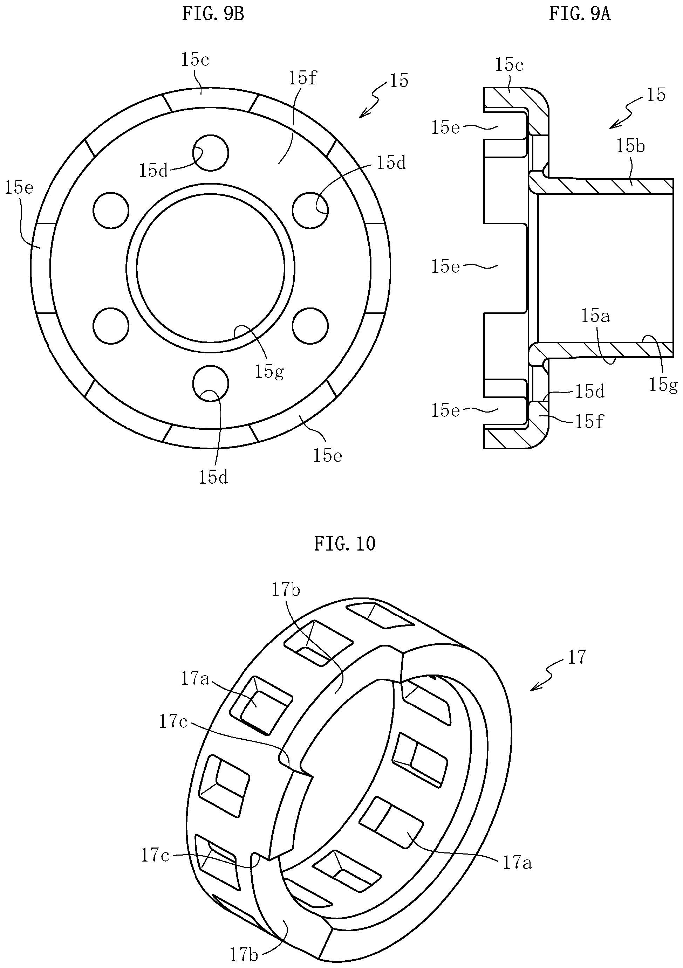

FIGS. 9A and 9B are views illustrating a configuration of the inner joint member 15. FIG. 9A is a cross-sectional view of the inner joint member 15, and FIG. 9B is a left side view of FIG. 9A.

As illustrated in FIGS. 9A and 9B, the inner joint member 15 includes a cylindrical portion 15b extending in the axial direction and an annular portion 15f expanding radially outward from one axial end portion of the cylindrical portion 15b. A hole 15g through which the output shaft 22 is inserted is formed radially inside the cylindrical portion 15b. Further, the cylindrical portion 15b is inserted into the cylindrical portion 14d of the lever-side outer joint member 14 described above in a state of being incorporated in the clutch unit (see FIG. 2). In a state where the cylindrical portion 15b is inserted into the cylindrical portion 14d of the lever-side outer joint member 14, the wedge gap 20 in which the cylindrical rollers 16 are disposed is formed between the individual cylindrical portions 15b and 14d (see FIG. 5).

A plurality of (six in the figure) claw portions 15c protruding in the axial direction is provided at an outer peripheral edge portion of the annular portion 15f. The plurality of claw portions 15c are provided at circumferentially equal intervals, and the cylindrical rollers 27 and the leaf spring 28 are disposed between the claw portions 15c (see FIG. 6). That is, the inner joint member 15 has a pocket 15e that accommodates the cylindrical rollers 27 and the leaf spring 28 between the claw portions 15c and functions as a cage that holds the cylindrical rollers 27 and the leaf spring 28. Further, in the annular portion 15f, a plurality of holes 15d, into which protrusions 22f (see FIG. 2) provided on the output shaft 22 are inserted, are provided at circumferentially equal intervals. In a state where the protrusion 22f of the output shaft 22 is inserted into the hole 15d, the protrusion 22f is disposed with a predetermined clearance with respect to the hole 15d.

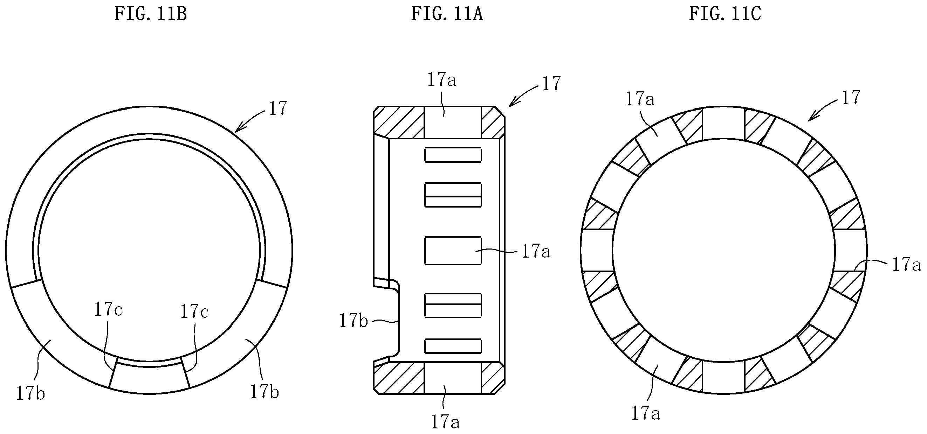

FIGS. 10 and 11A to 11C illustrate a configuration of the cage 17. FIG. 10 is a perspective view of the cage 17, FIG. 11A is a cross-sectional view of the cage 17, FIG. 11B is a left side view of FIG. 11A, and FIG. 11C is a cross-sectional view of FIG. 11A.

As illustrated in FIGS. 10 and 11A to 11C, the cage 17 is a cylindrical member having a plurality of pockets 17a at circumferentially equal intervals. Each pocket 17a accommodates one cylindrical roller 16 (see FIG. 5). Further, at one axial end portion of the cage 17, two recessed portions 17b for locking the inner centering spring 18 are formed.

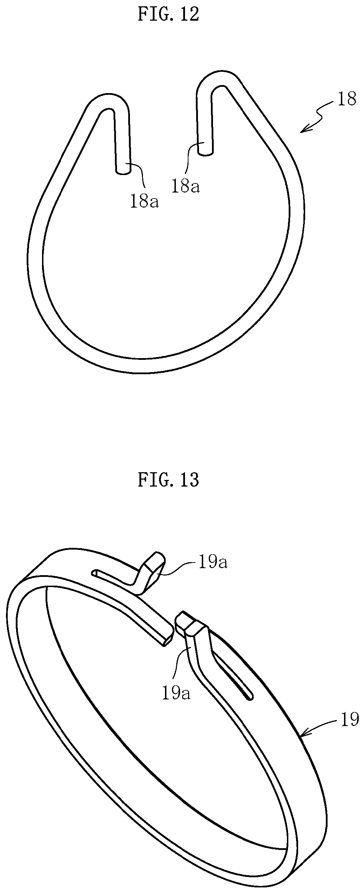

FIG. 12 is a perspective view of the inner centering spring 18.

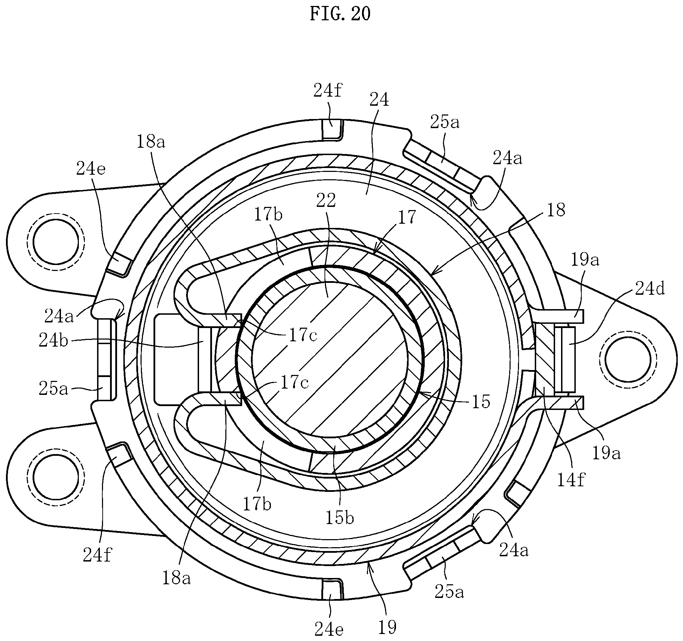

As illustrated in FIG. 12, the inner centering spring 18 is formed by bending a wire rod or the like having a circular cross section into a C shape. A part of the inner centering spring 18 is bent radially inward to form a pair of locking portions 18a. As illustrated in FIG. 20, the inner centering spring 18 is locked to the cage 17 by each locking portion 18a being locked to adjacent end surfaces 17c of two recessed portions 17b provided to the cage 17 described above.

FIG. 13 is a perspective view of the outer centering spring 19.

As illustrated in FIG. 13, the outer centering spring 19 is formed by bending a band plate member or the like into a C shape. A part of the outer centering spring 19 is bent radially outward to form a pair of locking portions 19a. As illustrated in FIG. 20, the outer centering spring 19 is locked to the lever-side outer joint member 14 by each locking portion 19a being locked so as to sandwich the claw portion 14f provided to the lever-side outer joint member 14 described above.

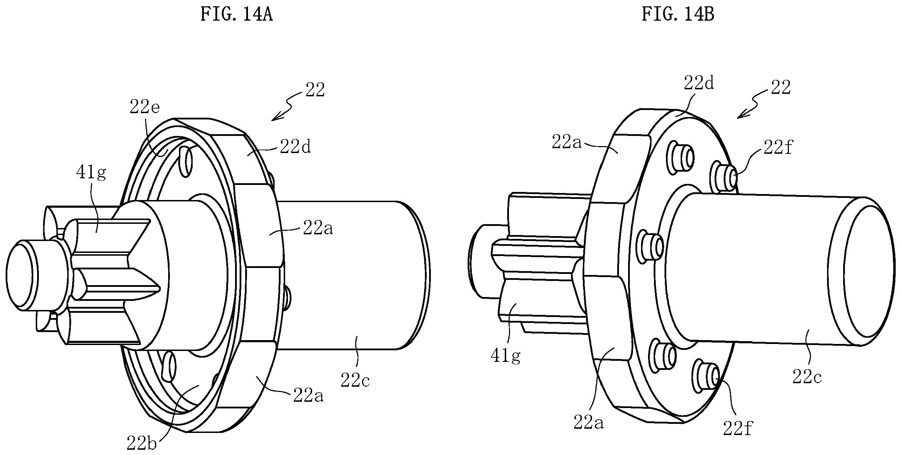

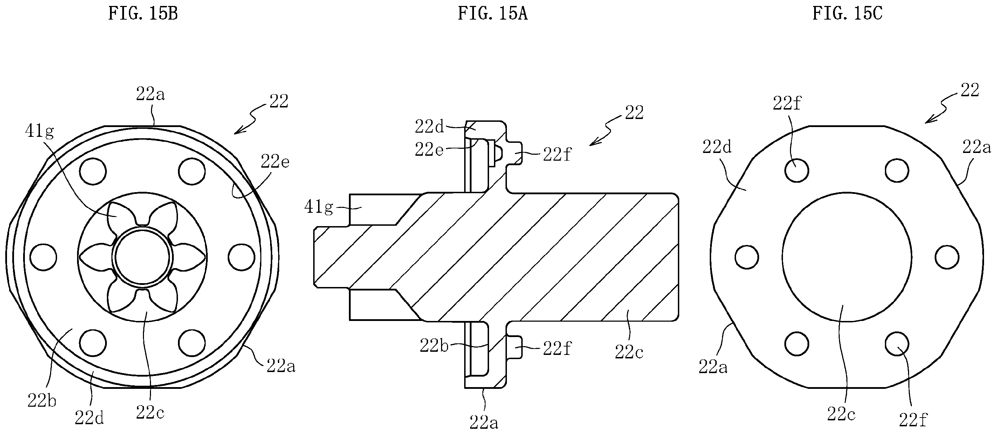

FIGS. 14A, 14B, and 15A to 15C are views illustrating a configuration of the output shaft 22. FIG. 14A is a perspective view of the output shaft 22 as viewed from one side, and FIG. 14B is a perspective view of the output shaft 22 as viewed from another side. FIG. 15A is a cross-sectional view of the output shaft 22, FIG. 15B is a left side view of FIG. 15A, and FIG. 15C is a right side view of FIG. 15A.

As illustrated in FIGS. 14A, 14B, and 15A to 15C , the output shaft 22 includes a shaft portion 22c, and a large diameter portion 22d that is integrally enlarged radially outward from a substantially central position in the axial direction of the shaft portion 22c. The pinion gear 41g that meshes with the sector gear 47 (see FIG. 1) of the link member 45 described above is coaxially provided at a distal end portion of the shaft portion 22c.

On an outer peripheral surface of the large diameter portion 22d, a plurality of (for example, six) flat cam surfaces 22a are formed at circumferentially equal intervals. Further, an annular recessed portion 22b accommodating the friction ring 29 is formed on one end surface in the axial direction of the large diameter portion 22d, and a plurality of protrusions 22f to be inserted into the respective holes 15d of the inner joint member 15 described above are provided on a surface (another end surface in the axial direction) opposite to the annular recessed portion 22b.

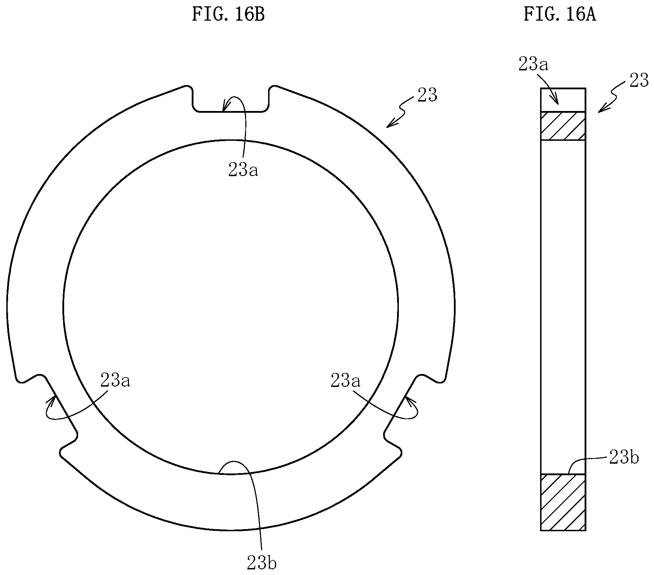

FIGS. 16A and 16B are views illustrating a configuration of the brake-side outer joint member 23. FIG. 16A is a cross-sectional view of the brake-side outer joint member 23, and FIG. 16B is a left side view of FIG. 16A.

As illustrated in FIGS. 16A and 16B, the brake-side outer joint member 23 is an annular member, and the large diameter portion 22d of the output shaft 22 described above is inserted into a radially inner side thereof (see FIG. 2). In a state where the large diameter portion 22d of the output shaft 22 is inserted into the brake-side outer joint member 23, the wedge gap 26 in which the cylindrical rollers 27 and the leaf spring 28 are disposed is formed between the inner peripheral surface 23b of the brake-side outer joint member 23 and the outer peripheral surface (cam surface 22a) of the large diameter portion 22d (see FIG. 6). Further, on an outer peripheral surface of the brake-side outer joint member 23, a plurality of (three in the figure) recessed portions 23a for connecting to the brake-side side plate 25 are formed.

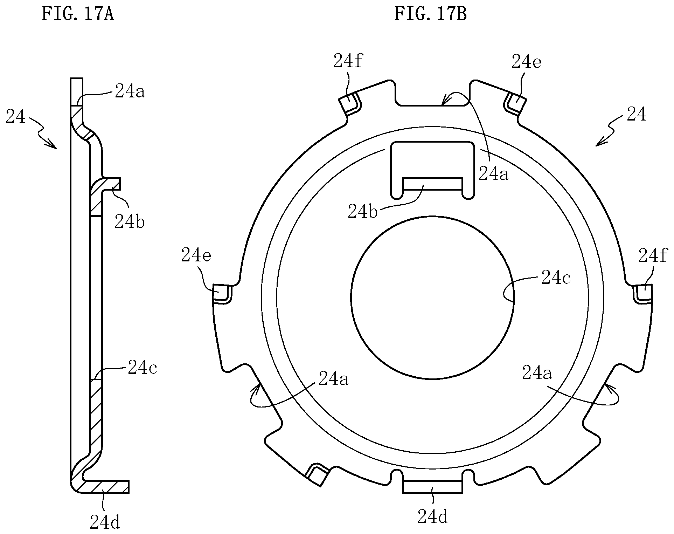

FIGS. 17A and 17B are views illustrating a configuration of the cover 24. FIG. 17A is a cross-sectional view of the cover 24, and FIG. 17B is a right side view of FIG. 17A.

As illustrated in FIGS. 17A and 17B, the cover 24 is an annular member having a hole 24c through which the output shaft 22 is inserted at a center thereof. Further, on an outer peripheral surface of the cover 24, a plurality of (three in the figure) recessed portions 24a are formed so as to correspond to the recessed portions 23a (see FIGS. 16A and 16B) of the brake-side outer joint member 23 described above. These recessed portions 24a are provided to connect the cover 24 and the brake-side side plate 25.

Further, the cover 24 is provided with two claw portions 24b and 24d for locking the inner centering spring 18 and the outer centering spring 19. One claw portion 24b is a claw portion for locking the inner centering spring 18, and is provided so as to protrude in the axial direction on a radially inside of the outer peripheral surface of the cover 24. Whereas, another claw portion 24d is a claw portion for locking the outer centering spring 19, and is provided so as to protrude in the axial direction from the outer peripheral surface of the cover 24 at a position different from the one claw portion 24b described above by 180° (on an opposite side in the circumferential direction across the hole 24c).

As illustrated in FIG. 20, the claw portion 24b for the inner centering spring is disposed so as to be sandwiched between two locking portions 18a of the inner centering spring 18, whereby the inner centering spring 18 is locked to the cover 24. Further, as illustrated in FIG. 20, the claw portion 24d for the outer centering spring is disposed so as to be sandwiched between two locking portions 19a of the outer centering spring 19, whereby the outer centering spring 19 is locked to the cover 24.

Further, as illustrated in FIG. 17B, two sets of locking portions 24e and 24f are provided on the outer peripheral surface of the cover 24. These two sets of locking portions 24e and 24f are portions functioning as rotation stoppers that restrict rotation of the lever-side outer joint member 14 when the claw portions 14g (see FIGS. 8A to 8C) of the lever-side outer joint member 14 abut on the two sets of locking portions 24e and 24f when the lever-side outer joint member 14 is rotated by the operation of the operation lever 43 described above. As a result, an operation angle of the operation lever 43 is restricted.

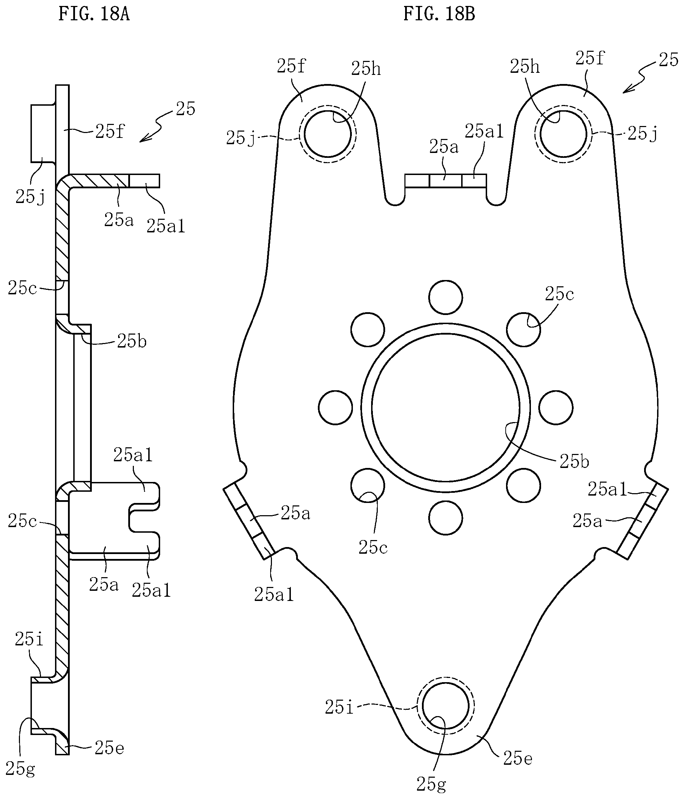

FIGS. 18A and 18B are views illustrating a configuration of the brake-side side plate 25. FIG. 18A is a cross-sectional view of the brake-side side plate 25, and FIG. 18B is a right side view of FIG. 18A.

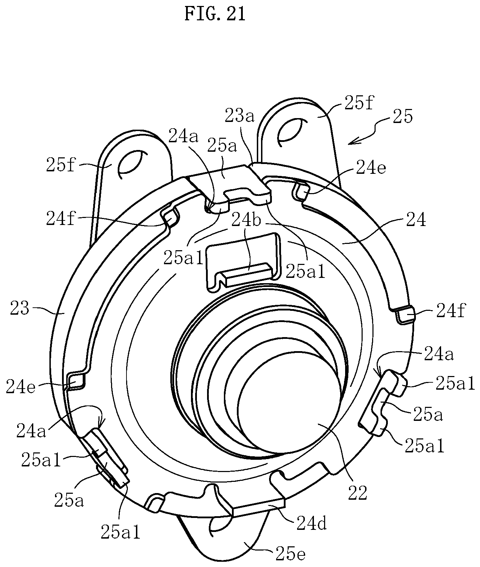

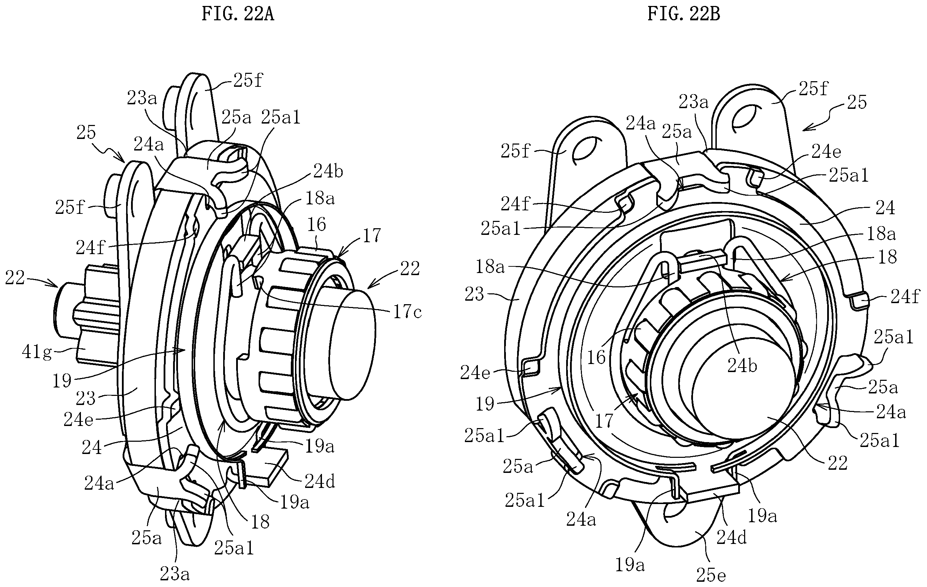

As illustrated in FIGS. 18A and 18B, the brake-side side plate 25 is a plate-shaped member having a hole 25b through which the output shaft 22 is inserted at a center thereof. On an outer peripheral surface of the brake-side side plate 25, a claw portion 25a protruding in the axial direction for connecting to the brake-side outer joint member 23 and the cover 24 is provided. A plurality of (three in the figure) claw portions 25a are provided corresponding to the respective recessed portions 23a and 24a of the brake-side outer joint member 23 and the cover 24. As illustrated in FIG. 21, the respective claw portions 25a of the brake-side side plate 25 are inserted into the recessed portions 23a and 24a of the brake-side outer joint member 23 and the cover 24. Further, as illustrated in FIGS. 22A and 22B, a bifurcated distal end portions 25a1 of the claw portions 25a are opened outward, thereby the brake-side side plate 25 is staked and fixed to the brake-side outer joint member 23 and the cover 24. As a result, the brake-side outer joint member 23, the cover 24, and the brake-side side plate 25 are integrally connected to constitute a stationary side member.

Further, as illustrated in FIGS. 18A and 18B, one flange portion 25e and two flange portions 25f as clutch attachment portions with respect to the seat lifter unit are provided at an outer peripheral edge of the brake-side side plate 25. These three flange portions 25e and 25f are provided with cylindrical portions 25i and 25j protruding in the axial direction, and the cylindrical portions 25i and 25j are respectively provided with attachment holes 25g and 25h with respect to the seat lifter unit. Further, a plurality of holes 25c for fixing the friction ring 29 are provided at circumferentially equal intervals around the hole 25b located at a center of the brake-side side plate 25.

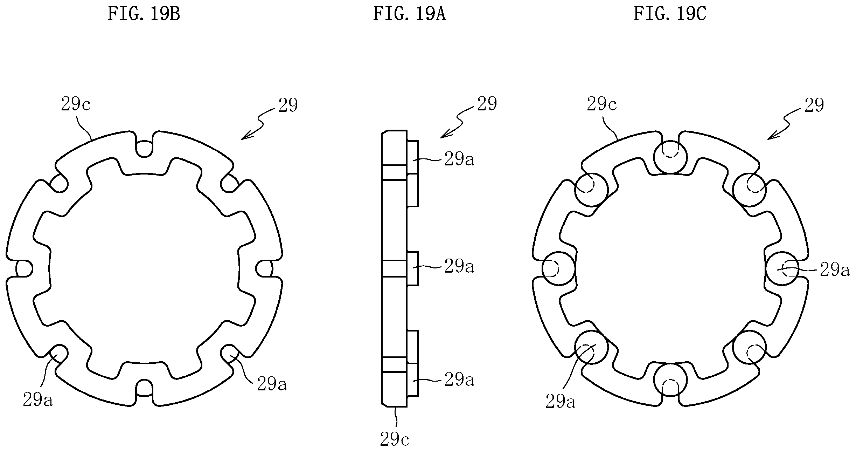

FIGS. 19A to 19C are views illustrating a configuration of the friction ring 29. FIG. 19A is a front view of the friction ring 29, FIG. 19B is a left side view of FIG. 19A, and FIG. 19C is a right side view of FIG. 19A.

As illustrated in FIGS. 19A to 19C, the friction ring 29 is an annular member made with resin or the like, and has one axial end surface provided with a plurality of circular protrusions 29a at circumferentially equal intervals. These protrusions 29a are press-fitted and fitted into the holes 25c (see FIGS. 18A and 18B) of the brake-side side plate 25 described above, thereby the friction ring 29 is fixed to the brake-side side plate 25 (see FIG. 2).

Further, the friction ring 29 is accommodated in the annular recessed portion 22b of the large diameter portion 22d of the output shaft 22 in a state of being fixed to the brake-side side plate 25 (see FIG. 2). Further, in this state, the friction ring 29 is press-fitted into an inner peripheral surface 22e of the annular recessed portion 22b of the output shaft 22 with a fastening allowance. Therefore, when the output shaft 22 rotates, a frictional force is generated between an outer peripheral surface 29c of the friction ring 29 and the inner peripheral surface 22e of the annular recessed portion 22b, and rotational resistance is applied to the output shaft 22.

Hereinafter, operations of the lever-side clutch part 11 and the brake-side clutch part 12 according to the present embodiment will be described.

First, when the operation lever 43 is rotationally operated and rotational torque is input to the lever-side clutch part 11, the lever-side outer joint member 14 rotates. Further, when the lever-side outer joint member 14 rotates, the cylindrical rollers 16 engage with the lever-side outer joint member 14 and the inner joint member 15 in between the lever-side outer joint member 14 and the inner joint member 15 (in the wedge gap 20) (see FIG. 5), and the rotational torque is transmitted from the lever-side outer joint member 14 to the inner joint member 15 via the cylindrical rollers 16. As a result, the inner joint member 15 rotates. Further, at this time, an elastic force is accumulated in both the centering springs 18 and 19 with rotation of the lever-side outer joint member 14 and the cage 17. Thereafter, when the rotational torque is no longer input, the lever-side outer joint member 14 and the cage 17 return to a neutral state by elastic restoring forces of both the centering springs 18 and 19, and the engagement of the cylindrical rollers 16 between the lever-side outer joint member 14 and the inner joint member 15 (in the wedge gap 20) is released. As a result, the transmission of the rotational torque from the lever-side outer joint member 14 to the inner joint member 15 via the cylindrical rollers 16 is blocked.

As described above, when the rotational torque is no longer input, the lever-side outer joint member 14 and the cage 17 return to a neutral state, while the inner joint member 15 maintains a given rotational position as it is. Therefore, by repeatedly performing the rotation operation of the operation lever 43, the inner joint member 15 rotates in an inching manner.

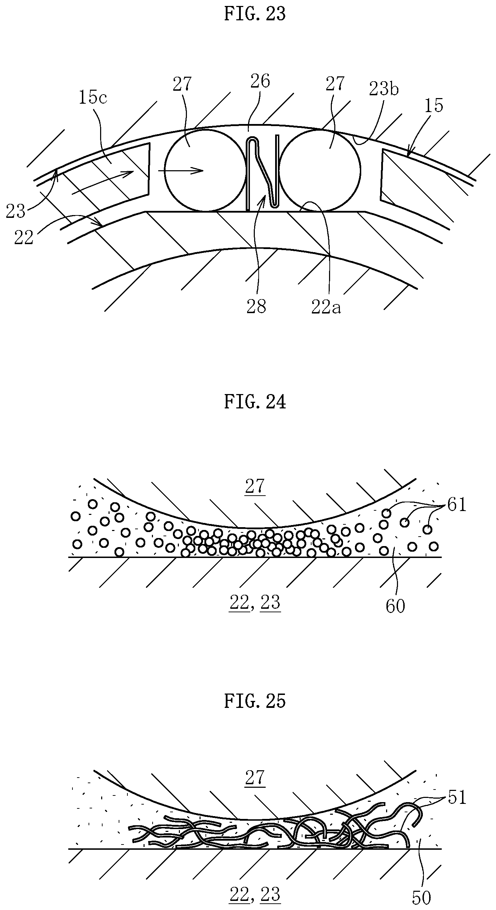

When the inner joint member 15 rotates, as illustrated in FIG. 23, the claw portion 15c of the inner joint member 15 pushes and moves the cylindrical rollers 27 in the arrow direction of the figure against an elastic force of the leaf spring 28. Then, when the inner joint member 15 further rotates, the hole 15d (see FIGS. 9A and 9B) of the inner joint member 15 comes into contact with the protrusion 22f (see FIGS. 14B, 15A, and 15C) of the output shaft 22, the rotational torque is transmitted from the inner joint member 15 to the output shaft 22 via the protrusion 22f, and the output shaft 22 rotates.

Further, when the rotation operation of the operation lever 43 is performed in an opposite direction, the output shaft 22 rotates in an opposite direction by the same mechanism as the above operation.

As described above, when the output shaft 22 rotates clockwise (forward direction) or counterclockwise (reverse direction) by the rotation operation of the operation lever 43, the sector gear 47 (see FIG. 1) swings, and a seat surface height of the seat 40 is adjusted.

Further, when rotational torque is reversely input from the output shaft 22 side, the cylindrical rollers 27 disposed between the output shaft 22 and the brake-side outer joint member 23 (in the wedge gap 26) engage with the cam surface 22a of the output shaft 22 and the inner peripheral surface 23b of the brake-side outer joint member 23, thereby locking the output shaft 22 so as not to rotate. As a result, the rotational force torque reversely input from the output shaft 22 is locked in the brake-side clutch part 12 and blocked so as not to be transmitted to the lever-side clutch part 11.

Thereafter, when the operation lever 43 is rotationally operated again and rotational torque is input from the lever-side outer joint member 14, as illustrated in FIG. 23, the cylindrical rollers 27 are pushed and moved by the rotation of the inner joint member 15, and the engagement of the cylindrical rollers 27 in the wedge gap 26 is released. As a result, the output shaft 22 becomes rotatable. Then, the output shaft 22 rotates to adjust the seat surface height of the seat 40.

Here, in the clutch unit 10 according to the present embodiment, by sealing grease in the internal spaces of the lever-side clutch part 11 and the brake-side clutch part 12, lubricity can be secured between the sliding surfaces of these components. However, if the lubricity of the enclosed grease is too high, in the brake-side clutch part 12, the engagement of the cylindrical rollers 27 with the brake-side outer joint member 23 and the output shaft 22 is easily released, and there is a possibility that the locked state when the reverse input rotational torque is input cannot be maintained.

For example, in a case of lithium-based grease, as illustrated in FIG. 25, lithium soap 51 contained as a thickener has a fiber structure including a large number of fibers 51 and has self-lubricity in which slippage is likely to occur between the fibers 51. Therefore, in a case where the lithium-based grease is interposed between the cylindrical rollers 27 and the brake-side outer joint member 23 and between the cylindrical rollers 27 and the output shaft 22, there is a concern that a static frictional force (static friction coefficient) therebetween becomes too low. In this case, the engagement (locked state) of the cylindrical rollers 27 with the output shaft 22 and the brake-side outer joint member 23 is released by a load (reverse input torque) when the passenger sits on the seat, and the seat surface position of the seat may be lowered.

Therefore, in the clutch unit 10 according to the present embodiment, in order to prevent the locked state from being released by the reverse input rotational torque as described above, the following measures are taken. Hereinafter, characteristic portions of the present embodiment will be described.

### <Thickener for grease>

In the present embodiment, in order to prevent a static frictional force between the cylindrical rollers 27 and the brake-side outer joint member 23 and between the cylindrical rollers 27 and the output shaft 22 from becoming too low, grease containing calcium sulfonate as a thickener is used. The grease may be formed with a base oil and a thickener, or may be formed by mixing an additive with the base grease formed with a base oil and a thickener. A type of the base oil is not particularly limited, and can be appropriately selected from known base oils.

As illustrated in FIG. 24, calcium sulfonate 60 is a thickener having a large number of fine particles 61 and has less self-lubricity than the lithium soap 51 having a fiber structure. Therefore, by interposing the grease containing calcium sulfonate between the cylindrical rollers 27 and the brake-side outer joint member 23 and between the cylindrical rollers 27 and the output shaft 22, it is possible to increase the static frictional force (static friction coefficient) therebetween as compared with the case of using the lithium-based grease.

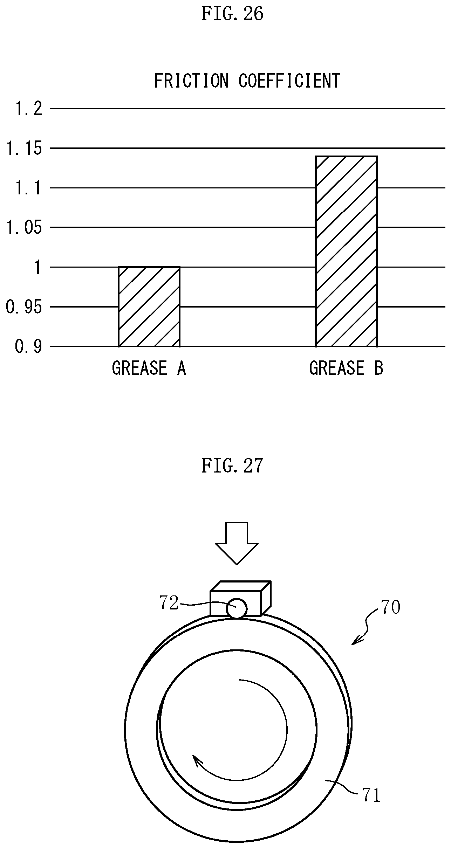

FIG. 26 illustrates relative values of friction coefficients of Grease A containing lithium soap and Grease B containing calcium sulfonate. A test device 70 illustrated in FIG. 27 was used to measure the friction coefficients of these Grease A and Grease B. Specifically, in an ambient temperature environment, grease was applied to an outer peripheral surface of a ring 71, and a ball 72 was brought into pressure contact with the ring 71. In this state, a friction coefficient was measured from a value of frictional resistance generated between the ring 71 and the ball 72 when the ring 71 was rotated. Note that the same mineral oil was used as the base oil of each of Grease A and Grease B.

In this test result, as illustrated in FIG. 26, the friction coefficient of Grease B containing calcium sulfonate was larger than that of Grease A containing lithium soap. Specifically, the friction coefficient of Grease B was about 1.14 times the friction coefficient of Grease A. From this, it was confirmed that, even when the same base oil was used, the friction coefficient increased when calcium sulfonate was used as a thickener.

Therefore, by using the grease containing calcium sulfonate as the grease for the clutch unit according to the present embodiment, the static frictional force (static friction coefficient) between the cylindrical rollers 27 and the brake-side outer joint member 23 and between the cylindrical rollers 27 and the output shaft 22 can be increased as compared with the case of using the lithium-based grease. As a result, engagement (locked state) of the cylindrical rollers 27 with the brake-side outer joint member 23 and the output shaft 22 is less likely to be released, thereby the locked state can be prevented from being released when the passenger sits on the seat, and the seat surface position can be favorably maintained.

The fine particles 61 described above contained in the calcium sulfonate preferably have a particle diameter of 0.1 µm or more and 0.2 µm or less. By using, as a thickener, calcium sulfonate having fine particles having such a particle diameter, it is possible to more reliably secure the static frictional force between the cylindrical rollers 27 and the brake-side outer joint member 23 and between the cylindrical rollers 27 and the output shaft 22, and to favorably maintain the locked state.

Further, a percentage of the calcium sulfonate in the grease is preferably 16% or more and 20% or less. Even when grease having such a calcium sulfonate content is used, the static frictional force between the cylindrical rollers 27 and the brake-side outer joint member 23 and between the cylindrical rollers 27 and the output shaft 22 can be more reliably secured, and the locked state can be favorably maintained.

### <About additive of grease>

As described above, in the clutch unit according to the present embodiment, by using the grease containing calcium sulfonate, the locked state becomes less likely to be released by reverse input rotational torque. Whereas, when the locked state is less likely to be released, it is conceivable that operability at the time of adjusting a seat surface height by operating the operation lever 43 is deteriorated. As a result, when the operation lever 43 is operated, the cylindrical rollers 27 are less likely to be pushed out of the wedge gap 27 by the rotating inner joint member 15, so that it is necessary to increase the operation force of the operation lever 43.

As described above, in the present invention, as a result of enabling the locked state to be favorably maintained, operability is deteriorated. Therefore, it is preferable to add a solid lubricant to the grease containing calcium sulfonate if it is desired to improve operability. By adding the solid lubricant, it is possible to adjust the static frictional force between the cylindrical rollers 27 and the brake-side outer joint member 23 and between the cylindrical rollers 27 and the output shaft 22 so as not to be excessively large, and thus, it is possible to improve the operability while ensuring a favorable locked state.

The solid lubricant is preferably molybdenum disulfide, polytetrafluoroethylene (PTFE), or melamine cyanuric acid (MCA). By adding such a solid lubricant, both maintaining of the locked state and improvement of operability can be achieved.

### <Surface roughness>

Further, in order to more reliably exhibit the effect obtained by using the grease containing calcium sulfonate as described above, a surface roughness Ra of a contact surface (sliding surface) of each of the cylindrical rollers 27, the brake-side outer joint member 23, and the output shaft 22 is preferably the following value.
- Surface roughness Ra of cylindrical rollers 27: 0.01 µm or more and 0.20 µm or less
- Surface roughness Ra of inner peripheral surface 23b (see FIG. 6) of brake-side outer joint member 23 in wedge gap 26: 0.04 µm or more and 0.60 µm or less
- Surface roughness Ra of cam surface 22a (see FIG. 6) of output shaft 22 in wedge gap 26: 0.20 µm or more and 2.5 µm or less

By setting the surface roughness Ra as described above, the effect of the present invention (maintaining of the locked state, or maintaining of the locked state and improvement of operability) can be obtained more reliably, and a clutch unit and an automobile seat lifter with high reliability can be provided.

Although each embodiment of the present invention has been described above, the present invention is not limited to the configuration of each embodiment described above, and can be appropriately modified without departing from the gist of the invention.

### REFERENCE SIGNS LIST

- 10: Clutch unit
- 11: Lever-side clutch part (input-side clutch part)
- 12: Brake-side clutch part (output-side clutch part)
- 22: Output shaft (output member)
- 23: Brake-side outer joint member (stationary member)
- 26: Wedge gap
- 27: Cylindrical roller (engaging element)
- 28: Leaf spring (elastic member)
- 39: Seat lifter unit
- 60: Calcium sulfonate
- 61: Fine particle

## Claims

1. A clutch unit comprising:
an input-side clutch part that controls transmission and blocking of input rotational torque; and
an output-side clutch part that transmits rotational torque input from the input-side clutch part to an output side and blocks rotational torque reversely input from the output side,
wherein the output-side clutch part includes a stationary member whose rotation is restrained, an output member that outputs rotational torque, a plurality of engaging elements disposed in a wedge gap between the stationary member and the output member, an elastic member that biases the engaging elements toward a narrow side of the wedge gap, and grease filled between the stationary member and the output member, and
the grease contains a thickener made with calcium sulfonate.

2. The clutch unit according to claim 1, wherein the grease contains a solid lubricant in addition to the thickener made with calcium sulfonate.

3. The clutch unit according to claim 2, wherein the solid lubricant is molybdenum disulfide, polytetrafluoroethylene, or melamine cyanuric acid.

4. The clutch unit according to any one of claims 1 to 3, wherein fine particles contained in the calcium sulfonate have a particle diameter of 0.1 µm or more and 0.2 µm or less.

5. The clutch unit according to any one of claims 1 to 3, wherein a percentage of the calcium sulfonate in the grease is 16% or more and 20% or less.

6. The clutch unit according to any one of claims 1 to 3, wherein
a surface roughness Ra of each of the engaging elements is 0.01 µm or more and 0.20 µm or less,
a surface roughness Ra of the stationary member in the wedge gap is 0.04 µm or more and 0.60 µm or less, and
a surface roughness Ra of the output member in the wedge gap is 0.20 µm or more and 2.5 µm or less.

7. The clutch unit according to any one of claims 1 to 3, wherein the input-side clutch part and the output-side clutch part are incorporated in an automobile seat lifter unit.
